# EUROPEAN PATENT APPLICATION

(11) **EP 4 239 758 A1**
(43) Date of publication of application: **06.09.2023**
(21) Application number: 21913625.6
(22) Date of filing: 24.11.2021
(51) Int. Cl.: H01M 10/613, H01M 10/625

(54) **BATTERY PACK**

(30) Priority: 31.12.2020 CN 202011636161
(71) Applicant: Nanjing Chervon Industry Co., Ltd., Nanjing, Jiangsu 211106 (CN)
(72) Inventor: YANG, Dezhong, Nanjing, Jiangsu 211106 (CN); ZHU, Ronggen, Nanjing, Jiangsu 211106 (CN)
(74) Representative: Sun, Yiming
(86) International application number: PCT/CN2021/132715
(87) International publication number: WO 2022/142883

(57) **Abstract**

Provided is a battery pack. The battery pack includes: multiple cell units; a housing forming an accommodating cavity for accommodating at least the multiple cell units, where the accommodating cavity is an enclosed space; and a thermal insulator disposed on the outer sides of the multiple cell units, where the interior of the thermal insulator is filled with a working medium for dissipating heat from the multiple cell units. When at least one of the multiple cell units reaches a preset temperature, the working medium changes a phase from a liquid state to a gaseous state to dissipate the heat from the multiple cell units.

## Description

This application claims priority to Chinese Patent Application No. 202011636161.1 filed with the China National Intellectual Property Administration (CNIPA) on Dec. 31, 2020, the disclosure of which is incorporated herein by reference in its entirety.

### TECHNICAL FIELD

The present application relates to a battery pack.

### BACKGROUND

A temperature rise of a battery pack is an important factor affecting the performance of the battery pack. It is proposed that heat from the battery pack is substantially absorbed through the phase change of a phase change material. However, a temperature at which the phase change material changes a phase affects its heat dissipation capability. The cost of using a material having a low phase change temperature is relatively high. A material having a high phase change temperature is used, and when the battery pack reaches a temperature higher than the temperature at which the phase change material changes the phase, the phase change material can substantially absorb heat by changing the phase, which is not conducive to dissipating the heat from the battery pack effectively. In addition, the phase change material needs to have at least two phases, and therefore, if the problems, how to store the phase change material and how to cause the phase change material to be sufficiently in contact with the battery pack, cannot be well solved, heat dissipation efficiency will be seriously affected. In addition, it is also necessary to ensure the safety performance of the battery pack and prevent the phase change of the phase change material from affecting internal elements of the battery pack.

### SUMMARY

Examples of the present application disclose a battery pack. The battery pack includes: multiple cell units; a housing forming an accommodating cavity for accommodating at least the multiple cell units, where the accommodating cavity is an enclosed space; and a thermal insulator disposed on the outer sides of the multiple cell units, where the interior of the thermal insulator is filled with a working medium for dissipating heat from the multiple cell units. When at least one of the multiple cell units reaches a preset temperature, the working medium changes a phase from a liquid state to a gaseous state to dissipate the heat from the multiple cell units.

Examples of the present application further disclose a battery pack. The battery pack includes: multiple cells; a housing forming an accommodating cavity for accommodating at least the multiple cells, where the accommodating cavity is an enclosed space; and a thermal insulator disposed on the outer sides of the multiple cells, where the interior of the thermal insulator is filled with a working medium for dissipating heat from the multiple cells. The multiple cells, the thermal insulator, the working medium, and the housing together constitute a dynamic heat dissipation system with a vapor state-liquid state-vapor state cyclic phase change in the enclosed space.

Examples of the present application further disclose a battery pack. The battery pack includes a housing in which an accommodating cavity is formed and at least one cell unit disposed in the accommodating cavity. The battery pack further includes: an isolation layer surrounding a cell unit; and a working medium disposed in the accommodating cavity, where the working medium is capable of switching between a liquid state and a gaseous state according to a temperature change of the cell unit, the accommodating cavity is configured to be enclosed, and the pressure of the accommodating cavity is not equal to atmospheric pressure.

Examples of the present application further disclose a battery pack. The battery pack includes a housing in which an accommodating cavity is formed and at least one cell unit disposed in the accommodating cavity. The battery pack further includes: a thermal insulator disposed in the accommodating cavity, supporting the at least one cell power, and further including capillary channels; an isolation layer surrounding a cell unit and disposed between the thermal insulator and the cell unit; and a working medium having at least a liquid state and a gaseous state, where the working medium in the liquid state is capable of being stored in the capillary channels of the thermal insulator.

### BRIEF DESCRIPTION OF DRAWINGS

FIG. 1 is a perspective view of a battery pack in an example of the present application;
FIG. 2 is a schematic view showing the interior of the battery pack in FIG. 1 in the present application;
FIG. 3 is a sectional view of the battery pack in FIG. 1 in the present application;
FIG. 4 is an enlarged view of portion 1A of the battery pack in FIG. 3 in the present application;
FIG. 5 is a schematic diagram showing the heat absorption of a working medium of the battery pack in FIG. 3 in the present application;
FIG. 6 is a schematic diagram showing the heat release of a working medium of the battery pack in FIG. 3 in the present application; and
FIG. 7 is a schematic diagram showing the relationship between ambient pressure and a boiling point when a working medium is water in the present application.

### DETAILED DESCRIPTION

In the description of the present application, the terms "joined", "connected", and "fixed" are to be understood in a broad sense unless otherwise expressly specified and limited. For example, the term "connected" may refer to "fixedly connected", "detachably connected", or integrated, may refer to "mechanically connected" or "electrically connected", or may refer to "connected directly", "connected indirectly through an intermediary", "connected inside two elements", or "interaction relations between two elements". For those of ordinary skill in the art, specific meanings of the preceding terms in the present application may be understood based on specific situations.

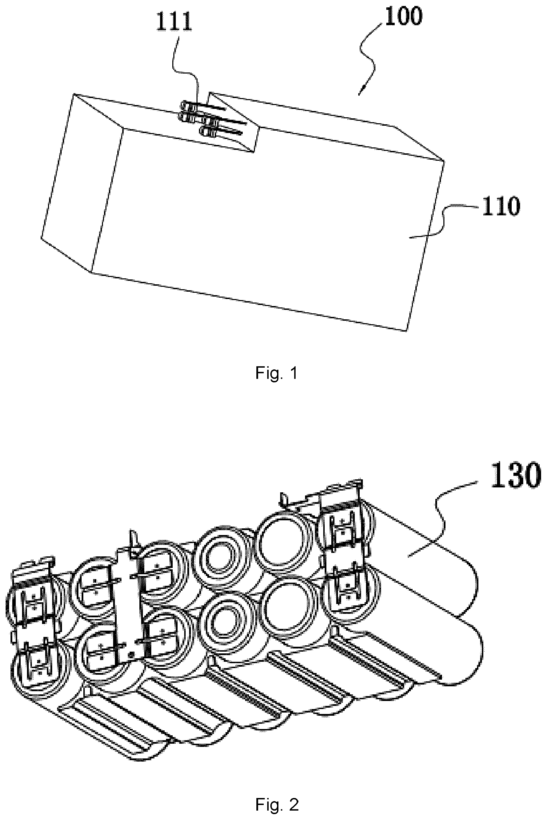

Referring to FIG. 1, a battery pack 100 includes a housing 110, cell units 120, and pole pieces 111, and the cell units 120 and the pole pieces 111 are encapsulated by the housing 110. An accommodating cavity 112 for accommodating at least multiple cell units is formed in the housing 110, where the cell units 120 are disposed in the accommodating cavity 112. The accommodating cavity 112 forms an enclosed space with preset pressure.

The battery pack further includes a thermal insulator 140, a working medium 300, and an isolation layer 130. The thermal insulator 140 is used for supporting or surrounding the multiple cell units 120. The isolation layer 130 surrounds a cell unit 120.

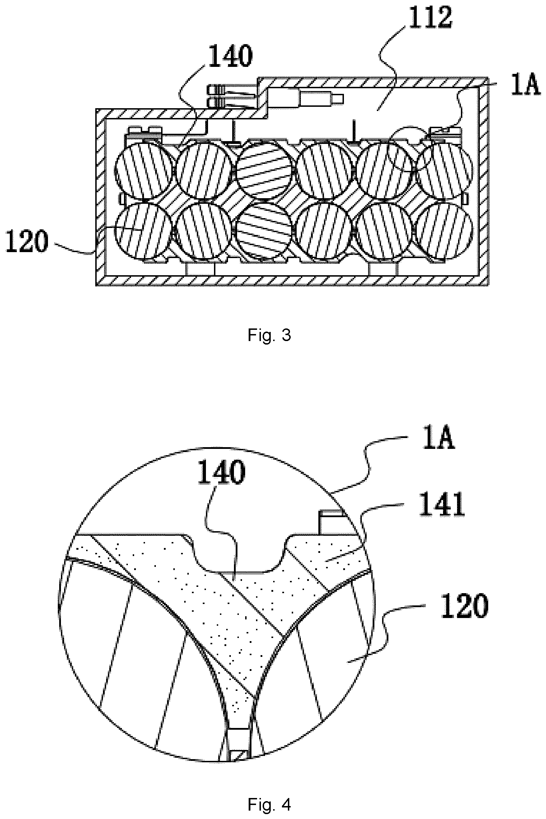

As an example, as shown in FIGS. 2 and 3, the thermal insulator is disposed on the outer sides of the multiple cell units. The thermal insulator 140 is disposed in the accommodating cavity 112 and includes multiple thermal insulation channels for accommodating the cell units 120. The thermal insulator is a porous material. The interior of the thermal insulator is filled with the working medium for dissipating heat from cells. In the enclosed space formed by the accommodating cavity, the cell units, the thermal insulator, the working medium, and the housing together constitute a dynamic heat dissipation system with a vapor state-liquid state-vapor state cyclic phase change.

In an environment within 100°C, the working medium 300 has at least a liquid state and a gaseous state. The working medium 300 can switch between the liquid state and the gaseous state according to a temperature change of the cell unit 120. The working medium 300 is used for absorbing heat generated by the cell unit 120 during a discharge of the battery pack 100. When at least one of the multiple cell units reaches a preset temperature, the working medium changes a phase from the liquid state to the gaseous state to dissipate the heat from the cell units.

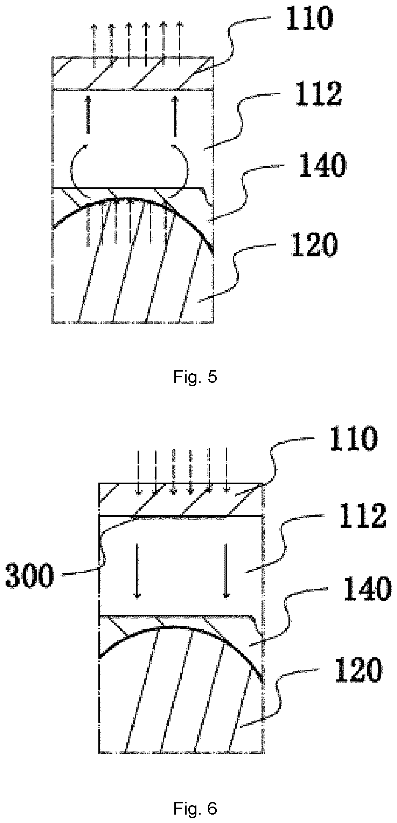

Referring to FIGS. 5 and 6, dashed arrows refer to a schematic diagram showing the flow direction of the heat, and solid arrows refer to a schematic diagram showing the flow direction of the working medium. When the heat from the cell units 120 is higher than the boiling point of the working medium, the working medium changes from the liquid state to the gaseous state, and heat in the battery pack 100 is substantially absorbed by the working medium so that the heat from the battery pack 100 is effectively dissipated. Vaporized molecules of the working medium 300 are dispersed in the accommodating cavity 112, part of the vaporized molecules are condensed on the inner surface of the housing 110 to dissipate the heat to transfer part of the heat to the housing 110, and the heat is transferred to the outside by the housing 110.

Compared with heat dissipation through a conventional solid state-liquid state phase change, the heat from the cell units can be dissipated out via the housing in the manner of liquid state-vapor state-liquid state dynamic cyclic heat dissipation.

The thermal insulator has relatively low thermal conductivity so that stored heat from the vaporized molecules can be prevented from being transferred back to the cell units, thereby further improving the heat dissipation efficiency of the battery pack. Each cell unit is separately and independently disposed in a channel formed by the thermal insulator. Because of the thermal insulation function of the thermal insulator, the heat from cell units adjacent to each other is isolated and not conducted. The thermal insulator can prevent thermal runaway of the battery pack. The firewall between the cell units is constructed by means of the thermal insulator, and the fire or explosion of a single cell unit will be isolated by the thermal insulator so that other cell units are not affected, thereby improving the performance and safety of the battery pack.

To improve the heat dissipation efficiency of the battery pack 100, the pressure in the accommodating cavity 112 is set to be lower than atmospheric pressure so that the boiling point of the working medium is reduced. When the temperature of the battery pack 100 rises to a certain extent, the working medium can vaporize and absorb the heat in time so that the battery pack 100 can be prevented from overheating. In an example, the cell units 120 are supported by the thermal insulator 140 so that the battery pack has a compact structure and the contact area of the working medium 300 and the cell unit 120 is increased.

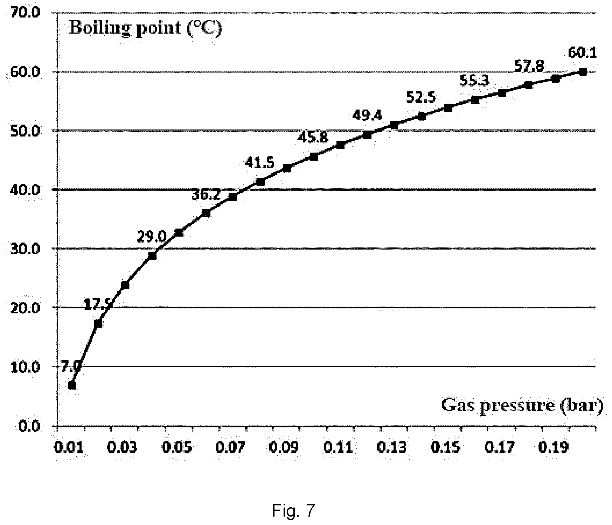

In an example, the working medium 300 includes water, and the working medium 300 may be completely water or may be a mixture of water or other materials. The accommodating cavity 112 is a sealed environment. Referring to FIG. 7, the pressure of the accommodating cavity 112 is set to be less than 40 kPa so that the boiling point of the working medium 300 in the accommodating cavity 112 is below 70 degrees. In an example, the boiling point of the working medium 300 may be set to 50 degrees to 60 degrees, 55 degrees, or 65 degrees. In an example, the working medium 300 may be another phase change material, such as an alcohol-based material. In an example, the working medium 300 may be a mixture of a phase change material and a non-phase change material. In an example, the working medium 300 is a mixture of a liquid material and a solid material, where the thermal insulator 140 may accommodate the liquid material and connect or support the solid material. In an example, the working medium 300 may be a material capable of having the solid state and the liquid state in the battery pack, and the heat is absorbed when the working medium 300 is melted into a liquid from a solid so that the battery pack is cooled.

The pressure of the accommodating cavity 112 is set such that the boiling point of the working medium 300 is lower than or equal to 70 degrees. When the working medium 300 is water, the accommodating cavity 112 is the sealed environment, and the pressure of the accommodating cavity 112 is set to be less than 40 kPa. In an example, the pressure of the accommodating cavity 112 is set to be less than 20 kPa.

The material of the housing 110 may be a plastic, or at least part of the material of the housing 110 may be a metallic material so that the heat dissipation efficiency is improved. In an example, the inner surface of the housing 110 is a substance which does not react with the working medium 300, such as an organic substance, a dense metal oxide, or another inorganic substance. Thus, the housing 110 is prevented from reacting with the working medium 300 to reduce the heat dissipation efficiency and damage the structure of the battery pack. In an example, a coating is further disposed on the inner surface of the housing 110, where the coating is made of the substance which does not react with the working medium 300, such as the organic substance or a metal oxide which does not react. The coating is used for blocking the working medium 300 and the housing 110 and preventing the housing 110 and the working medium 300 from reacting with each other in a high-temperature environment, or the coating is used for blocking the working medium 300 from flowing out of the housing 110 to improve the sealing property of the housing 110.

In an example, the housing is made of a material including one or a combination of aluminum, copper, and stainless steel.

The thermal insulator 140 forms capillary channels 141. The working medium is absorbed and stored through capillary action so that the working medium can be stored in the capillary channels 141 of the thermal insulator 140. In an example, the thermal insulator 140 is in contact with the isolation layer 130, the heat from a cell is transferred to the thermal insulator 140 and the working medium 300 in the thermal insulator 140 through the isolation layer 130, the working medium 300 absorbs the heat and vaporizes to continue absorbing the heat, the vaporized molecules are dispersed in the accommodating cavity 112, and the part of the vaporized molecules are condensed on the inner surface of the housing 110 to dissipate the heat to transfer the part of the heat to the housing 110, thereby improving the heat dissipation efficiency. The condensed working medium 300 is then adsorbed by the thermal insulator 140. The thermal insulator 140 is the porous material. The thermal insulator is sparse and porous and can store a liquid in the capillary channels. In an example, the thermal insulator 140 is made of a material at least partially including diatomaceous earth. With the heat-resistant and flame-retardant properties of the diatomaceous earth, the diatomaceous earth can effectively prevent the housing 110 of the battery pack 100 from overheating and can effectively reduce a probability that the battery pack 100 is on fire and explodes, thereby improving the safety of the battery pack 100. With the porous property of the v earth, the working medium 300 is stored in the diatomaceous earth.

In the vaporization process of the working medium 300, since the accommodating cavity is the enclosed space, part of the working medium 300 changes from the liquid to a gas so that the pressure in the accommodating cavity is increased. As the pressure in the accommodating cavity is increased, the boiling point of the working medium 300 changes, and at certain pressure and a certain temperature, the working medium is in the state of gaseous and liquid equilibrium. Due to the hygroscopic property of the diatomaceous earth, the working medium 300 in the liquid state can return to the peripheries of the cell units 120 through the capillary channels 141 to dissipate the heat from the cell units 120 repeatedly. In the enclosed space, the cells, the thermal insulator, the working medium, and the housing together constitute the dynamic heat dissipation system with the vapor state-liquid state-vapor state cyclic phase change.

In an example, the thermal insulator further includes an exhaust passage. When changing into the gas, the working medium 300 in the thermal insulator can be discharged from the thermal insulator through the exhaust passage so that the process is accelerated in which the working medium 300 is transferred to the inner wall of the housing.

The thermal insulator 140 is used for supporting the cell units 120. The thermal insulator 140 is disposed on the peripheral sides of the cell units 120. In an example, the thermal insulator 140 is disposed on at least one or more of the front portion, the rear portion, and a side of the cell unit 120. The cell unit 120 is in contact with the thermal insulator 140 through the isolation layer 130. The heat exchange efficiency of the cell unit 120 and the working medium 300 is improved by the thermal insulator 140. In an example, the thermal insulator 140 itself forms an integrally formed housing and has multiple through holes, where the thermal insulator 140 includes the through holes accommodating the cell units 120, and the cell units 120 are placed into the through holes. In an example, the thermal insulator 140 covers at least 30% of the outer surface areas of the cell units 120. In an example, the thermal insulator 140 covers at least 30% to 80% of the outer surfaces of the cell units 120.

In an example, the enclosed space formed by the accommodating cavity 112 is configured to be a vacuum, where the vacuum refers to that the content of a non-condensable gas contained in the enclosed space is lower than 20% of the volume of the enclosed space or the enclosed space is a full vacuum environment. The non-condensable gas refers to a gas which is not condensed along with a cooling material and does not produce a refrigeration effect.

The battery pack further includes a gas valve disposed on the housing and used for evacuating the accommodating cavity 112 during the manufacture of the battery pack. In an example, the battery pack further includes a gas pressure sensor configured to detect the pressure of the accommodating cavity 112 so that the current heat dissipation capability of the battery pack is acquired, thereby facilitating the power supply management of the battery pack.

The difference between the preset pressure of the accommodating cavity 112 and the atmospheric pressure is not equal to zero. The preset pressure in the accommodating cavity is adjusted so that the boiling point of the working medium 300 in the sealed accommodating cavity 112 is changed. Thus, a temperature at which the working medium 300 in the accommodating cavity 112 changes the phase is adjusted so that the working medium 300 can change the phase at a desired ambient temperature to substantially absorb the heat. In an example, the preset pressure of the accommodating cavity 112 is less than the atmospheric pressure, and in this case, the working medium is water or another material having a boiling point higher than a desired temperature at the atmospheric pressure. In an example, the preset pressure of the accommodating cavity 112 is greater than the atmospheric pressure, and in this case, the working medium is a material having a boiling point lower than the desired temperature at the atmospheric pressure such as a certain organic material.

In an example, the housing 110 includes a pressure adjustment device configured to adjust the effect of the phase change of the working medium 300 on the pressure of the accommodating cavity 112.

The isolation layer 130 is disposed between the thermal insulator 140 and the cell unit 120 and configured to block the working medium from coming into the cell unit 120. When the working medium is water, the isolation layer 130 should include at least a waterproof layer, and in an example, the isolation layer 130 is covered on the surface of the cell unit 120 in the manner of vapor deposition. The thickness of the isolation layer 130 is greater than or equal to 100 nanometers and less than or equal to 600 nanometers. The impedance of the isolation layer 130 in a thickness direction is less than or equal to 100 milliohms. The isolation layer 130 includes a first material existing in the form of particles with a particle size of less than or equal to 100 nanometers. In an example, the isolation layer further includes an insulating layer.

In an example, a battery pack is provided, and the battery pack includes at least one cell unit disposed in an accommodating cavity, an isolation layer surrounding the cell unit, a working medium having at least a liquid state and a gaseous state in an environment within 100°C, and a thermal insulator disposed in the accommodating cavity and further including capillary channels, where the working medium in the liquid state can be stored in the capillary channels of the thermal insulator. The battery pack further includes a support member for supporting the cell unit, and in an example, the thermal insulator is in contact with the cell unit.

The battery pack further includes an outer housing. The outer housing is disposed outside the housing to constitute the housing of the battery pack. The outer housing is held by a user.

A method for manufacturing a battery pack 100 is provided. The method includes: providing an isolation layer 130 on the outer side of a cell unit 120; placing the cell unit 120 into a through hole of a thermal insulator 140; placing the thermal insulator 140 in a housing 110 and storing a working medium in the thermal insulator 140; and sealing an accommodating cavity 112 after the pressure of the accommodating cavity 112 in the housing 110 is adjusted.

In an example, a battery pack is provided, and the battery pack includes a housing and at least one cell unit, where an enclosed accommodating cavity is formed inside, and the cell unit is disposed in the accommodating cavity. The battery pack further includes: a working medium having at least a liquid state and a gaseous state in an environment within 100°C; and a thermal insulator in which the working medium is stored, where the thermal insulator is disposed in the accommodating cavity, and when changing between the liquid state and the gaseous state, the working medium moves between the thermal insulator and the inner surface of the housing.

In an example, a battery pack is provided, and the battery pack includes a heat dissipation assembly and at least one cell unit. The heat dissipation assembly includes a condensation portion and a heat absorption portion, where the condensation portion forms an enclosed accommodating cavity. The cell unit is disposed in the accommodating cavity, and the heat absorption portion is disposed between the cell unit and the condensation portion. The battery pack further includes a working medium stored in the heat absorption portion, where at least part of the working medium can absorb heat to change a phase from a liquid to a gas and is condensed from the gas into the liquid in the condensation portion.

In an example, a battery pack is provided, and the battery pack includes a housing in which an accommodating cavity is formed and at least one cell unit disposed in the accommodating cavity. The battery pack further includes: an isolation layer surrounding a cell unit; a thermal insulator disposed in the accommodating cavity, supporting the cell unit, and further including capillary channels; and a working medium having at least a liquid state and a gaseous state, where the working medium in the liquid state can be stored in the capillary channels of the thermal insulator.

In an example, a battery pack is provided, and the battery pack includes a housing in which an accommodating cavity is formed and at least one cell unit disposed in the accommodating cavity. The battery pack further includes: an isolation layer surrounding a cell unit; and a working medium disposed in the accommodating cavity, where the working medium can switch between a liquid state and a gaseous state according to a temperature change of the cell unit, and the accommodating cavity is configured to be enclosed.

To solve the deficiencies of the related art, examples of the present application disclose the battery pack with a good heat dissipation effect and high safety performance.

The battery pack disclosed by some examples of the present application is provided with the thermal insulator for storing the working medium so that efficiency with which the working medium dissipates the heat from the battery pack is improved and the thermal insulator has the function of preventing the battery pack from burning or exploding.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A battery pack, comprising:
a plurality of cell units (120);
a housing (110) forming an accommodating cavity (112) for accommodating at least the plurality of cell units (120), wherein the accommodating cavity (112) is an enclosed space; and
a thermal insulator (140) disposed on outer sides of the plurality of cell units (120), wherein an interior of the thermal insulator (140) is filled with a working medium for dissipating heat from the plurality of cell units (120);
wherein, when at least one of the plurality of cell units (120) reaches a preset temperature, the working medium changes a phase from a liquid state to a gaseous state to dissipate the heat from the plurality of cell units (120).

2. The battery pack according to claim 1, wherein the thermal insulator (140) is a porous material.

3. The battery pack according to claim 1, wherein the working medium is water.

4. The battery pack according to claim 1, wherein pressure of the enclosed space is less than or equal to 40 kPa.

5. The battery pack according to claim 1, wherein the thermal insulator (140) comprises capillary channels (141) and the working medium is movable in the capillary channels (141).

6. The battery pack according to claim 5, wherein the thermal insulator (140) further comprises an exhaust passage, and when the working medium is in the gaseous state, part of the working medium is capable of being discharged from the thermal insulator (140) through the exhaust passage.

7. The battery pack according to claim 1, wherein materials of the housing (110) comprise a metallic material and a plastic.

8. The battery pack according to claim 1, wherein an inner surface of the housing (110) comprises a substance which does not react with the working medium.

9. The battery pack according to claim 1, wherein an inner surface of the housing (110) comprises a coating made of a substance which does not react with the working medium.

10. A battery pack, comprising:
a plurality of cells;
a housing (110) forming an accommodating cavity (112) for accommodating at least the plurality of cells, wherein the accommodating cavity (112) is an enclosed space; and
a thermal insulator (140) disposed on outer sides of the plurality of cells, wherein an interior of the thermal insulator (140) is filled with a working medium for dissipating heat from the plurality of cells;
wherein, the plurality of cells, the thermal insulator (140), the working medium, and the housing (110) together constitute a dynamic heat dissipation system with a vapor state-liquid state-vapor state cyclic phase change in the enclosed space.

11. The battery pack according to claim 10, further comprising:
an isolation layer (130) disposed between each of the plurality of cell units and the thermal insulator (140).

12. The battery pack according to claim 10, further comprising:
a gas valve disposed on the housing (110).

13. The battery pack according to claim 10, further comprising an outer housing disposed outside the housing (110).

14. The battery pack according to claim 10, further comprising a pressure sensor configured to detect pressure in the accommodating cavity (112).

15. The battery pack according to claim 10, wherein the housing (110) is made of a material comprising one or a combination of aluminum, copper, and stainless steel.

16. The battery pack according to claim 10, wherein the thermal insulator (140) covers at least 30% of outer surface areas of cell units (120).

17. The battery pack according to claim 10, further comprising:
a support member for supporting the thermal insulator (140) and the cell units (120).

18. The battery pack according to claim 10, wherein a difference between internal pressure of the accommodating cavity (112) and atmospheric pressure is not equal to zero.

19. A battery pack, comprising:
a housing (110) in which an accommodating cavity (112) is formed; and
at least one cell unit (120) disposed in the accommodating cavity (112);
wherein the battery pack further comprises:
a working medium having at least a liquid state and a gaseous state in an environment within 100°C; and a thermal insulator (140) for storing the working medium, wherein
the thermal insulator (140) is disposed in the accommodating cavity (112), and when changing between the liquid state and the gaseous state, the working medium moves between the thermal insulator (140) and an inner surface of the housing (110).

20. A battery pack, comprising:
at least one cell unit (120); and
a heat dissipation assembly comprising a **condensation** portion and a heat absorption portion, wherein the condensation portion forms an enclosed accommodating cavity (112), the at least one cell unit (120) is disposed in the accommodating cavity (112), and the heat absorption portion is disposed between the at least one cell unit (120) and the condensation portion;
wherein the battery pack further comprises:
a working medium stored in the heat absorption portion, wherein at least part of the working medium is capable of absorbing heat to change a phase from a liquid to a gas and is condensed from the gas into the liquid in the condensation portion.

21. A battery pack, comprising:
a housing (110) in which an accommodating cavity (112) is formed; and
at least one cell unit (120) disposed in the accommodating cavity (112);
wherein the battery pack further comprises:
a thermal insulator (140) disposed in the accommodating cavity (112), supporting the at least one cell unit (120), and further comprising capillary channels (141);
an isolation layer (130) surrounding a cell unit (120) and disposed between the thermal insulator (140) and the cell unit (120); and
a working medium having at least a liquid state and a gaseous state, wherein the working medium in the liquid state is capable of being stored in the capillary channels (141) of the thermal insulator (140).
